# EUROPEAN PATENT APPLICATION

(11) **EP 1 883 236 A2**
(43) Date of publication of application: **30.01.2008**
(21) Application number: 06123327.6
(22) Date of filing: 01.11.2006
(51) Int. Cl.: H04N 7/035

(54) **Teletext data slicer and method thereof**

(30) Priority: 25.07.2006 US 459661
(71) Applicant: MediaTek, Inc, Taiwan (TW)
(72) Inventor: Lin, Siou-Shen, 235 Jhonghe City Taipei County (TW); Chang, Wen-chang, 407, Taichung City (TW); Chin, Hao-yun, 116, Taipei City (TW)
(74) Representative: Patentanwälte Kewitz & Kollegen

(57) **Abstract**

A data decoder decoding an input signal, comprising a comparator (54), a converter (56), and a data check module (58). The comparator (54) compares the input signal (Sᵢₙ) with a threshold level (Sₜₕ) to generate first data (Dₛ), such that each bit of the first data is one of two possible states, and identifies an ambiguous bit of the first data in an ambiguous range. The converter (56) coupled to the comparator (54) converts the first data to parallel. The data check module (58) coupled to the converter (56) evaluates whether the first data is inaccurate according to an error checking code thereof, and changes the ambiguous bit to the other possible state, if the first data is inaccurate. The ambiguous range includes the threshold level.

## Description

### BACKGROUND OF THE INVENTION

### Field of the Invention

The invention relates to teletext, and in particular to a teletext data slicer and method thereof.

### Description of the Related Art

Teletext is a popular service for European television broadcast, commonly providing information including TV schedules, current affairs and sports news, games and subtitling in different languages. Teletext comprises encoded data carried in the vertical blanking interval (VBI) of a television broadcast signal that temporarily suspends transmission of the signal, allowing scanning to return to the first line of the television screen to trace the next. Upon reception, a data slicer in a receiver compares the broadcast signal transmitted at the VBI with a slicing level to determine each bit representing the teletext data.

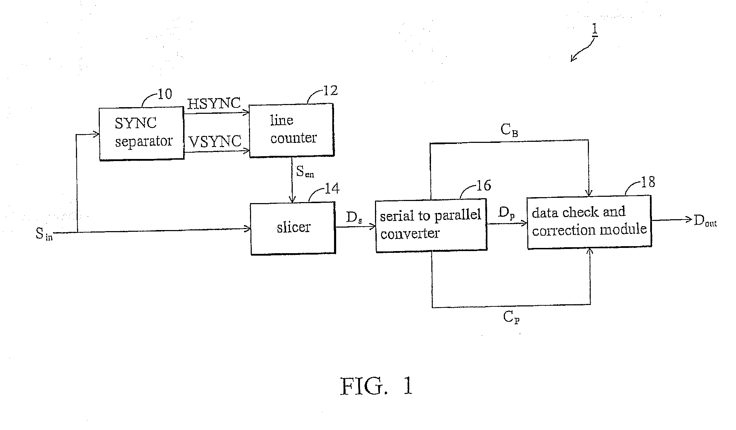

FIG. 1 is a block diagram of a conventional data slicing system, comprising SYNC separator 10, line counter 12, slicer 14, Serial to Parallel buffer 16, and data check and correction module 18. SYNC separator 10 is coupled to line counter 12, slicer 14, Serial to Parallel buffer 16, and subsequently to data check and correction module 18.

SYNC separator 10 receives television signal Sᵢₙ to generate horizontal synchronization signal HSYNC and vertical synchronization signal VSYNC to line counter 12. Line counter 12 calculates a number of scan lines of television signal Sᵢₙ according to signals HSYNC and VSYNC to determine the location of VBI. When the number of the scan lines reaches a predetermined range carrying the teletext data, line counter 12 generates line enable signal Sₑₙ to slicer 14. In World System Teletext (WST), teletext data is located at scan lines 6-12 and 318~335, therefore line counter 12 generates line enable signal Sₑₙ to slicer 14 during the scan line ranges, to enable slicer 14 to slice television signal Sᵢₙ according to threshold level Sₜₕ and generate teletext data Dₛ. Serial to Parallel buffer 16 receives and converts the serially received data Dₛ into data Dₚ that is transmitted simultaneously to data check and correction module 18. Since teletext data deploys different error checking codes based on the packet number and data byte number thereof, Serial to Parallel buffer16 generates byte count C_{B} and packet number C_{P}, so that data check and correction module 18 can employ corresponding error checking algorithms for data D_{P} accordingly to produce output data Dₒᵤₜ.

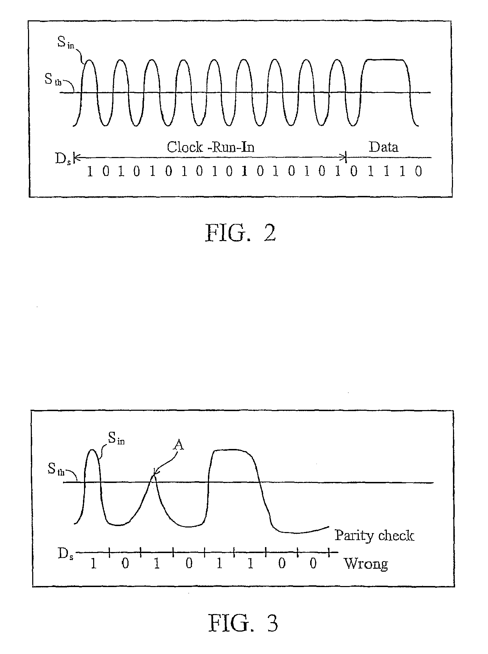

FIG. 2 shows a waveform diagram for slicing input signal in a noiseless transmission environment, incorporating the conventional data slicing system in FIG. 1, comprising input television signal Sᵢₙ, threshold level Sₜₕ, and sliced data Ds. The threshold level is decided from the clock-run-in (CRI) period, and is set for judging each bit carried by teletext to be either 0 or 1. Input signal Sᵢₙ is not disrupted by interferences and signal level thereof is well above or below threshold level Sₜₕ, and slicer 14 is able to produce clear sliced data Ds.

However, input signal Sᵢₙ experiences various interference including environmental noise and group delay during data transmission, such that signal quality of input signal Sin degrades and signal level thereof may approach threshold level Sₜₕ, leading to false data determination and highlighting the possibility of error generation in output data Dₒᵤₜ.

FIG. 3 shows a waveform diagram of input signal Sᵢₙ and threshold level Sₜₕ in a noisy transmission environment, incorporating the conventional data slicing system in FIG. 1, comprising input television signal Sᵢₙ, threshold level Sₜₕ, and sliced data Dₛ. Input signal Sᵢₙ suffers signal degradation by interference and signal level at point A, just above threshold level Sₜₕ, and slicer 14 generates "logic 1" despite data at point A being "logic 0" suffering serious interference.

Despite teletext encoding with error correction schemes, correction is limited. Teletext deploys two error checking code schemes, namely parity check and Hamming code, where odd parity merely provides error check without correction capability, and Hamming 8/4 is only capable of 1 bit error correction. When environmental interference is severe, multiple errors may occur in input signal Sᵢₙ, and the conventional data slicing system in FIG. 1 is unable to compensate the problem.

Thus it is desirable to have a data slicer to reduce data error in the teletext.

### BRIEF SUMMARY OF THE INVENTION

A detailed description is given in the following embodiments with reference to the accompanying drawings.

According to the invention, a data decoder decoding an input signal comprises a comparator and a data check module. The comparator compares the input signal with a threshold level to generate a first bitstream, and identifies an ambiguous bit in the first bitstream when the corresponding input signal is determined as belonging to an ambiguous range. The data check module evaluates whether the first bitstream is erroneous according to an error checking code thereof, and inverts at least one ambiguous bit if the first bitstream is erroneous. And the ambiguous range includes the threshold level.

According to another embodiment of the invention, a data decoder decoding an input signal comprises a comparator and a data check module. The comparator compares the input signal with a first threshold level to generate a first bitstream, and compares the input signal with a second threshold level to generate a second bitstream, where each bit of the first and second bitstream is one of two possible states. The data check module evaluates whether the first bitstream is erroneous according to an error checking code thereof, evaluates whether the second bitstream is erroneous according to the error checking code thereof if the first bitstream is erroneous, and outputs the second bitstream if it is errorless, else outputting the first bitstream.

According to yet another embodiment of the invention, a method of decoding an input signal comprises comparing the input signal with a threshold level to generate a first bitstream, identifying an ambiguous bit in the first bitstream when the corresponding input signal is determined as belonging to an ambiguous range, evaluating whether the first data is inaccurate according to an error checking code thereof, and inverting at least an ambiguous bit if the first bitstream is erroneous, and wherein the ambiguous range includes the threshold level.

According to yet another embodiment of the invention, a method of decoding an input signal comprises comparing the input signal with a first threshold level to generate a first bitstream, comparing the input signal with a second threshold level to generate a second bitstreams, evaluating whether the first bitstream is erroneous according to an error checking code thereof, and evaluating whether the second bitstream is errorneous according to the error checking code if the first bitstream is erroneous.

### BRIEF DESCRIPTION OF THE DRAWINGS

The invention can be more fully understood by reading the subsequent detailed description and examples with references made to the accompanying drawings, wherein:

FIG. 1 is a block diagram of a conventional data decoder.

FIG. 2 is a waveform diagram of sliced input signals in a noiseless transmission environment.

FIG. 3 is a waveform diagram of input signal Sᵢₙ and threshold level Sₜₕ in a noisy transmission environment.

FIGs. 4a and 4b show error correction schemes of teletext compliant with WST system.

FIG. 5 is a block diagram of an exemplary data decoder of the invention.

FIGs. 6a, 6b, and 6c are waveform diagrams with ambiguous data compensation, incorporating data encoder 5 in FIG. 5.

FIGs. 7a and 7b are block diagrams of two exemplary threshold level generators incorporated in slicer 54 in FIG. 5.

FIG. 8 is a flowchart of an exemplary decoding method incorporating data decoder 5 in FIG. 5.

FIG. 9 is another block diagram of an exemplary data decoder of the invention.

FIGs. 10a, b, and c are waveform diagrams, slicing data with multiple threshold levels, incorporating data decoder 9 in FIG. 9.

FIG. 11 is a flowchart of an exemplary decoding method incorporating data decoder 9 in FIG. 9.

FIG. 12 is yet another block diagram of an exemplary data decoder of the invention.

FIG. 13 is a flowchart of an exemplary decoding method incorporating data decoder 12 in FIG. 12.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

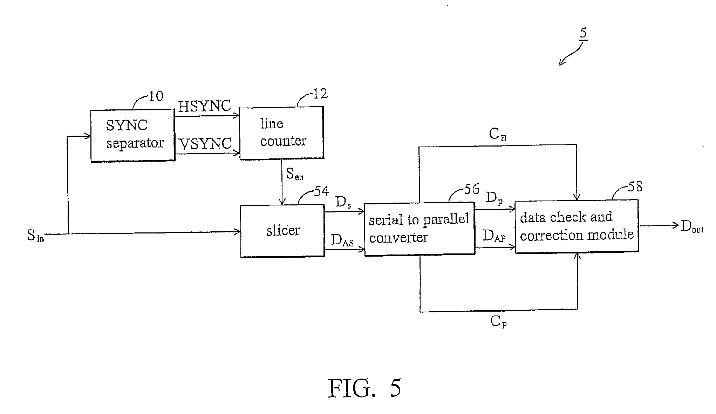

FIG. 5 is a block diagram of an exemplary bitstream decoder of the invention, comprising SYNC separator 10, line counter 12, slicer 54, Serial to Parallel converter 56, and bitstream check and correction module 58. SYNC separator 10 is coupled to line counter 12, slicer (comparator) 54, Serial to Parallel converter 56, and subsequently to bitstream check and correction module 58.

SYNC separator 10 receives input signal Sᵢₙ to separate horizontal and vertical synchronization signals HSYNC and VSYNC for output to line counter 12, enabling slicer 54 (comparator) based thereon. Input signal Sᵢₙ may be a television broadcast signal carrying bitstream Dₛ with an error checking code.

Upon enablement, slicer 54 compares input signal Sᵢₙ with threshold level Sₜₕ to generate first bitstream Dₛ, such that each bit of first bitstream Dₛ is one of two possible states, and identifies an ambiguous bit of the first bitstream when input signal Sᵢₙ is determined as belonging to an ambiguous range. Data Dₛ may be a teletext bitstream compliant with WST, encoded by an error checking code every 8 bits. The two possible states may be "logic 1" and "logic 0". Slicer 54 slices input signal Sᵢₙ according to the frequency of clock_run_in, and determines data bit as "logic 1" if input signal Sᵢₙ exceeds threshold level Sₜₕ, and "logic 1" if input signal Sᵢₙ is less than threshold level Sₜₕ. The ambiguous range includes threshold level Sₜₕ, and may be a signal range plus or minus threshold level Sₜₕ. Slicer 54 detects data bit of bitstream Dₛ falling into the ambiguous range to identify the ambiguous bit, and generates 8-bits ambiguous bitstream D_{AS} accordingly. For example, if a second bit of 8-bits bitstream Ds is ambiguous, slicer 54 generates ambiguous bitstream D_{AS} '0100 0000'.

Serial to Parallel converter 56 stores 8-bits serial bitstream D_{S} and ambiguous bitstream D_{AS} in a buffer thereof, converts both into parallel bitstream Dₚ and D_{AP}, and passes both to data check and correction module 58 (data check module). Because teletext employs two ECC schemes based on the packet number and the data byte, Serial to Parallel converter 56 also delivers packet number C_{P} and number of data byte C_{B} to data check and correction module 58. In WST system, a scan line comprises 42 bytes excluding clock-run-in part and framing code, and the first two in the 42 bytes include magazine and packet number information. Thus Serial to Parallel converter 56 generates packet number C_{P} according to the first two bytes of a scan line, and comprises a data byte counter calculating number of data bytes C_{B} for each packet.

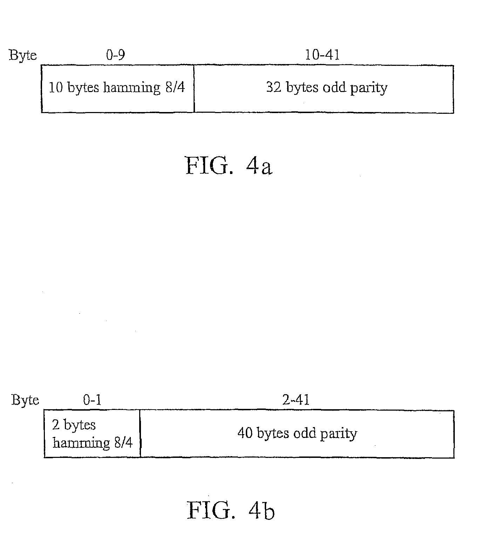

FIGs. 4a and 4b show error correction schemes of teletext compliant with WST system. FIG. 4a illustrates ECC data format for packet number 0, and the first 10 bytes use Hamming 8/4 ECC, byte 10-41 use odd parity. FIG. 4b is ECC data format for packet number 1∼25, wherein the first 2 bytes use Hamming 8/4 ECC, and bytes 2-41 use odd parity.

Referring back to FIG. 5, data check and correction module 58 evaluates ECC of data Dₚ to determine accuracy, inverts the ambiguous bit to the other possible state to generate inverted bitstream, if the ECC evaluation indicates bitstream Dₚ is erroneous, and outputs bitstream Dₚ as output bitstream Dₒᵤₜ otherwise. Data check and correction module 58 then performs another ECC check on the inverted bitstream, outputs the bitstream Dₚ if the inverted bitstream is erroneous, and outputs the inverted bitstream otherwise. Data check and correction module 58 performs odd parity or Hamming 8/4 check based on packet number C_{P} and number of bitstream byte C_{B}, as indicated in FIGs. 4a and 4b.

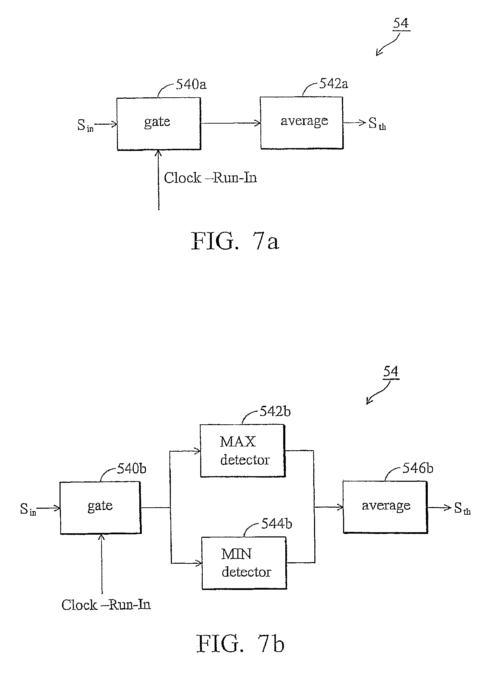

Threshold level Sₜₕ may be fixed or adaptive according to amplitude of input signal Sᵢₙ. FIGs. 7a and 7b are block diagrams of two exemplary threshold level generators incorporated in slicer 54 in FIG. 5. The threshold level generator in FIG. 7a comprises gate 540a and average amplitude generator 542a. Gate 540a detects and outputs amplitude of clock_run_in part in input signal Sᵢₙ to average amplitude generator 542a, thereby averaging the amplitude to generate threshold level Sₜₕ. The threshold level generator in FIG. 7b comprises gate 540b, MAX amplitude detector 542b, MIN amplitude detector 544b, and average amplitude generator 546b. Gate 540b detects and outputs amplitude of clock_run_in to MAX amplitude detector 542b and MIN amplitude detector 544b, determining and outputting the maximum and minimum amplitudes to average amplitude generator 546b, thereby averaging the maximum and minimum amplitudes to generate threshold level Sₜₕ.

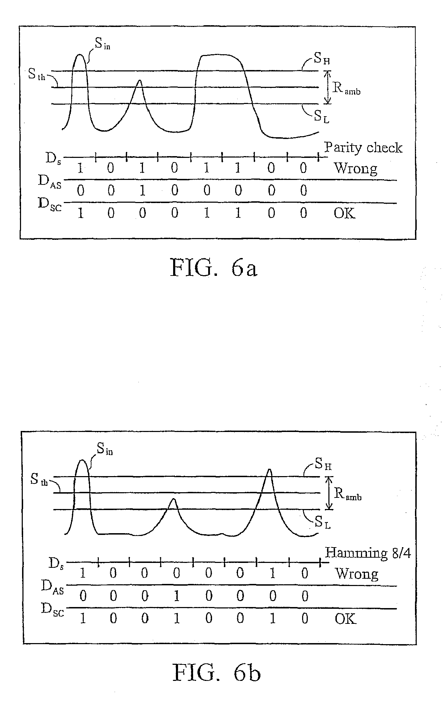

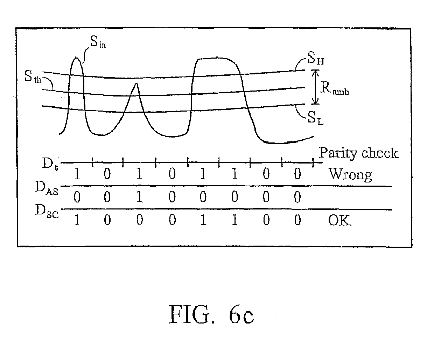

FIG. 6a is a waveform diagram with ambiguous bitstream compensation, incorporating bitstream encoder 5 in FIG. 5, odd parity ECC, and fixed threshold level Sₜₕ. Ambiguous range R_{amb} is a fixed range with respect to threshold level Sₜₕ, and comprises upper limit S_{H} and lower limit S_{L}. If input signal Sᵢₙ is less than upper limit S_{H} or exceeds lower limit S_{L}, slicer 54 determines input signal Sᵢₙ is in ambiguous range R_{amb}, and generates a "logic 1" indicating the ambiguous bit in ambiguous bitstream D_{AS}. If input signal Sᵢₙ is outside ambiguous range R_{amb}, slicer 54 generates a "logic 0" in ambiguous bitstream D_{AS}. In FIG. 6a, the third bit of bitstream Ds falls into ambiguous range R_{amb}, and slicer 54 generates bitstream Ds '1010 1100' and ambiguous bitstream D_{AS} '0010 0000' to Serial to Parallel converter 56, both converted to parallel bitstream Dₚ and D_{AP} accordingly. The parity check in data check and correction module 58 indicates bitstream Dp is erroneous, thus bitstream Dp is XORed with bitstream D_{AP} to provide inverted bitstream D_{SC} '1000 1100', errorless by another parity check according thereto. Thus bitstream slicer 5 outputs inverted bitstream D_{SC} as output bitstream Dₒᵤₜ.

FIG. 6b shows a waveform diagram with ambiguous bitstream compensation, incorporating the bitstream encoder in FIG. 5, Hamming 8/4 ECC, and fixed threshold level Sₜₕ. Slicer 54 generates bitstream Ds '1000 0010' and D_{AP} '0001 0000', converted to parallel bitstream Dₚ and D_{AP} in Serial to Parallel converter 56. Data check and correction module 58 determines bitstream Dₚ after Hamming 8/4 evaluation, such that XORing bitstream Dₚ with bitstream D_{AP} provides inverted bitstream D_{SC} '1001 0010', errorless according to another Hamming 8/4 evaluation. Data slicer 5 outputs inverted bitstream D_{SC} as output bitstream Dₒᵤₜ.

FIG. 6c is a waveform diagram with ambiguous bitstream compensation, incorporating bitstream encoder 5 in FIG. 5, odd parity ECC, and adaptive threshold level Sₜₕ. Threshold level Sₜₕ is adaptive according to bitstream part of input signal Sᵢₙ, and ambiguous range Ramb is fixed with respect to adaptive threshold level Sₜₕ.

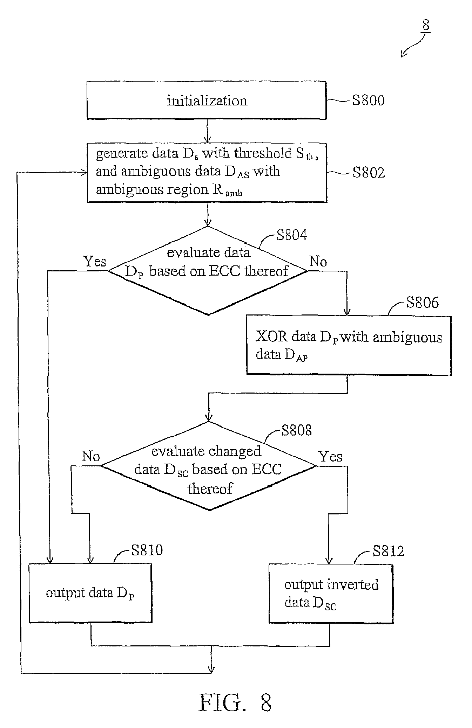

FIG. 8 is a flowchart of an exemplary decoding method incorporating bitstream slicer 5 in FIG. 5. In step S800, slicer 54 determines slicing frequency and threshold level Sₜₕ according to clock_run_in during initialization. Next in step S802, slicer 54 compares input signal Sᵢₙ with threshold level Sₜₕ to generate bitstream Ds, each bit of bitstream Dₛ being one of two possible states, and identifying ambiguous bitstream D_{AP} when input signal Sᵢₙ is determined as belonging to the ambiguous range. After converting to parallel bitstream Dₚ and ambiguous bitstream D_{AP} in Serial to Parallel converter 56, data check and correction module 58 evaluates bitstream Dₚ according to the ECC type thereof in step S804, outputs parallel bitstream Dp as output bitstream Dₒᵤₜ if the ECC evaluation is errorless (step S810), and inverts the ambiguous bit to the other possible state by XORing bitstream Dₚ and D_{AP} and producing inverted bitstream D_{SC}, if the ECC evaluation is erroneous (step S806). Then in step S808, data check and correction module 58 again evaluates inverted bitstream D_{SC} according to the ECC type thereof, outputs inverted bitstream D_{SC} as output bitstream Dₒᵤₜ if the ECC evaluation is errorless (step S812), and outputs original bitstream Dp otherwise (step S810). Decoding method 8 continues to decode input signal Sᵢₙ by steps 5802~5812, until the process is terminated.

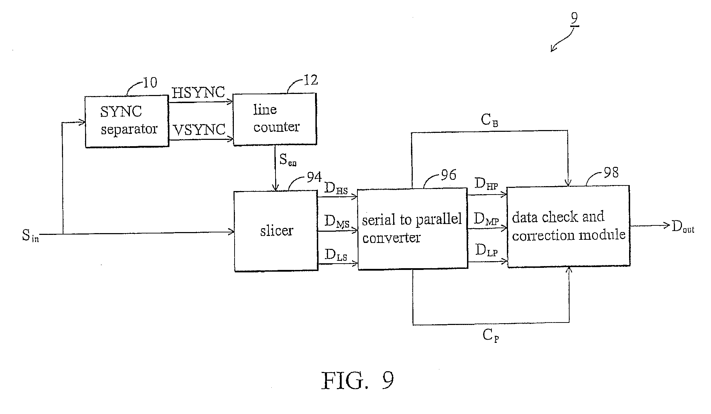

FIG. 9 is another block diagram of an exemplary bitstream slicer of the invention, comprising SYNC separator 10, line counter 12, slicer 94, Serial to Parallel converter 96, and bitstream check and correction module 98. SYNC separator 10 is coupled to line counter 12, slicer 94, Serial to Parallel converter 96, and subsequently to bitstream check and correction module 98.

Data slicer 9 is identical to bitstream slicer 5, except bitstream slicer 9 generates high bitstream D_{HS} and low bitstream D_{LS} with high threshold level S_{thH} and low threshold level S_{thL} to compensate ambiguous bitstream nearby main threshold level Sₜₕ. Slicer 94 compares input signal Sᵢₙ with main threshold level Sₜₕ, high threshold level S_{thH}, and low threshold level S_{thL} to generate serial main bitstream D_{MS}, high bitstream D_{HS}, and low bitstream D_{LS}, where each bit of bitstream D_{MS}, D_{HS}, D_{LS} is one of two possible states.

Serial to parallel converter 96 stores serial bitstream D_{MS}, D_{HS}, D_{LS} in a buffer therein, and converts and outputs serial bitstream D_{MS}, D_{HS}, D_{LS} to parallel bitstream D_{MP}, D_{HP}, D_{LP}.

Data check and correction module 98 evaluates ECC of bitstream D_{MP} to determine accuracy, if main bitstream D_{MP} is erroneous, evaluates whether high bitstream D_{HP} is erroneous according to the corresponding error checking code, and outputs main bitstream D_{MP} as output bitstream Dₒᵤₜ otherwise. If high bitstream D_{HP} is erroneous, bitstream check and correction module 98 further evaluates whether low bitstream D_{LP} is erroneous according to the corresponding correction code, and outputs high bitstream D_{HP} as output bitstream Dₒᵤₜ if ECC evaluation is correct. And finally, if low bitstream D_{LP} is correct, bitstream check and correction module 98 outputs low bitstream D_{LP} as output bitstream Dₒᵤₜ, otherwise outputs original bitstream D_{MP}. Data check and correction module 58 performs odd parity or Hamming 8/4 check based on packet number C_{P} and number of bitstream bytes C_{B}, as indicated in FIGs. 4a and 4b.

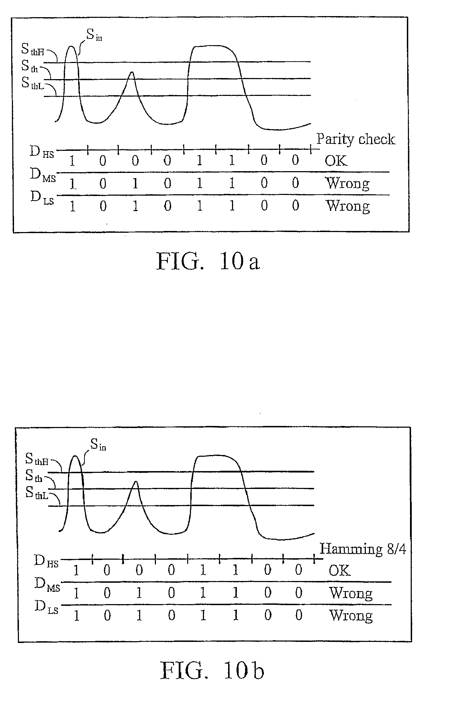

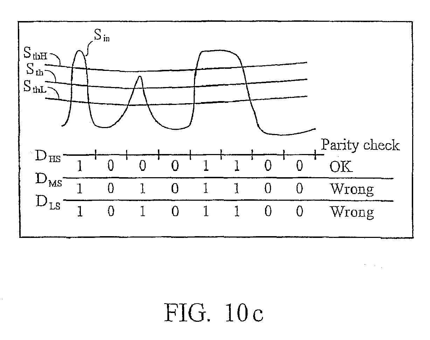

FIGs. 10a, b, and c are waveform diagrams slicing bitstream with multiple threshold levels, incorporating data slicer 9 in FIG. 9.

FIG. 10a incorporates odd parity ECC and fixed threshold level Sₜₕ. Slicer 94 generates main bitstream D_{MS} '1010 1100', high bitstream D_{HS} '1000 1100', and low bitstream D_{LS} '1010 1100' with main threshold level Sₜₕ, high threshold level S_{thH}, and low threshold level S_{thL}. Data check and correction module 98 performs parity check on main bitstream D_{MS}, bitstream D_{MS} is erroneous, and therefore performs another parity check on high bitstream D_{HS}. Because the parity check of high bitstream D_{HS} is errorless, Data check and correction module 98 outputs high bitstream D_{HP} as output bitstream Dₒᵤₜ.

FIG. 10b incorporates Hamming 8/4 ECC and fixed threshold level Sₜₕ. Slicer 94 generates main bitstream D_{MS} '1010 1100', high bitstream D_{HS} '1000 1100', and low bitstream D_{LS} '1010 1100' with main threshold level Sₜₕ, high threshold level S_{thH}, and low threshold level S_{thL}. Data check and correction module 98 evaluates Hamming 8/4 ECC based on main bitstream D_{MS}, bitstream D_{MS} is erroneous, and therefore evaluates another Hamming 8/4 ECC based on high bitstream D_{HS}. Because the parity check of high bitstream D_{HS} is correct, Data check and correction module 98 outputs high bitstream D_{HP} as output bitstream D_{out.}

FIG. 10c incorporates parity check ECC and adaptive threshold level Sₜₕ. Threshold level Sₜₕ is adaptive according to bitstream part of input signal Sᵢₙ, the distance between high threshold level S_{thH} and adaptive threshold level Sₜₕ is fixed, as is the distance between high threshold level S_{thH} and adaptive threshold level Sₜₕ. Slicer 94 generates main bitstream D_{MS} '1010 1100', high bitstream D_{HS} '1000 1100', and low bitstream D_{LS} '1010 1100' with main threshold level Sₜₕ, high threshold level S_{thH}, and low threshold level S_{thL}. Data check and correction module 98 performs parity check on main bitstream D_{MS}, bitstream D_{MS} is erroneous, and therefore performs another parity check on high bitstream D_{HS}. Because the parity check of high bitstream D_{HS} is correct, Data check and correction module 98 outputs high bitstream D_{HP} as output bitstream Dₒᵤₜ.

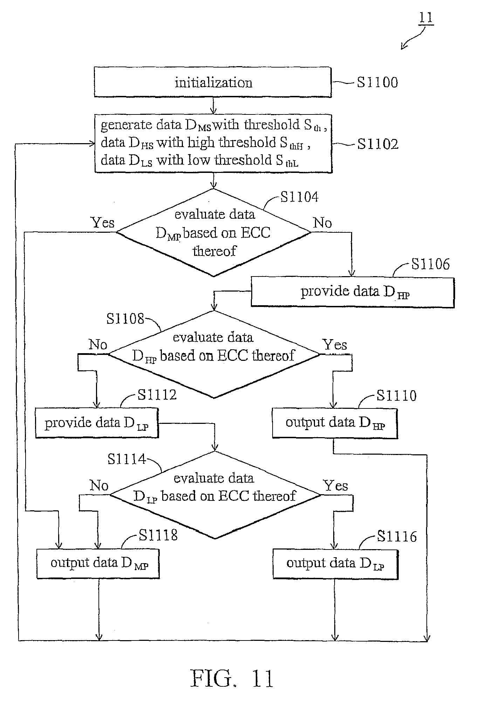

FIG. 11 is a flowchart of an exemplary decoding method incorporating data slicer 9 in FIG. 9. In step S1100, slicer 94 determines slicing frequency and threshold level Sₜₕ according to clock_run_in during initialization. Next in step S1102, slicer 94 compares input signal Sᵢₙ with main threshold level Sₜₕ, high threshold level S_{thH}, and low threshold level S_{thL} to generate serial main bitstream D_{MS}, high bitstream D_{HS}, and low bitstream D_{LS}, each bit of bitstream D_{MS}, D_{HS}, and D_{LS} being one of two possible states. After converting to parallel bitstream D_{MP}, D_{HP}, and D_{LP} in Serial to Parallel converter 96, data check and correction module 98 evaluates bitstream D_{MP} according to the ECC type thereof in step S1104, outputs main bitstream D_{MP} as output bitstream Dₒᵤₜ if the ECC evaluation is errorless (step S1118), and evaluates ECC of high bitstream D_{HP} if the ECC evaluation of bitstream D_{MP} is erroneous (step S1108). Data check and correction module 98 outputs high bitstream D_{HP} as output bitstream Dₒᵤₜ if high bitstream D_{HP} is errorless (step S1110), and further evaluates ECC of low bitstream D_{LS} otherwise (step S1114). In step S1116, data check and correction module 98 outputs low bitstream D_{LS} as output bitstream Dₒᵤₜ if ECC evaluation thereof is correct, and outputs the original main bitstream D_{MS} otherwise. Decoding method 11 continues to decode input signal Sᵢₙ by steps S1102~S1118, until the process is terminated.

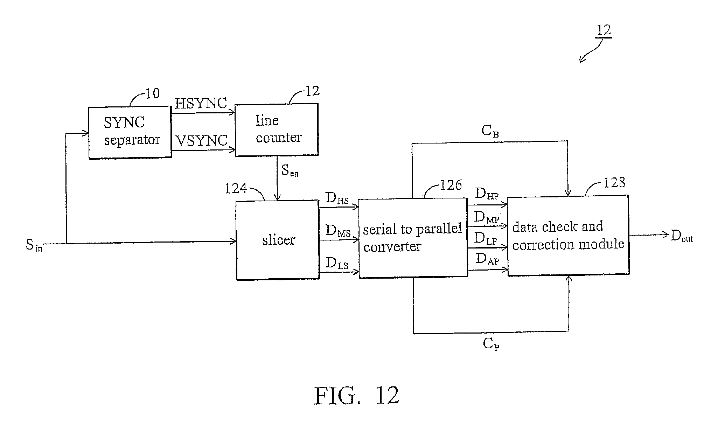

FIG. 12 is yet another block diagram of an exemplary data slicer of the invention, comprising SYNC separator 10, line counter 12, slicer 124, Serial to Parallel converter 126, and data check and correction module 128. SYNC separator 10 is coupled to line counter 12, slicer 124, Serial to Parallel converter 126, and subsequently to data check and correction module 128.

Data slicer 12 combines the ambiguous range in data slicer 5 and multiple threshold levels in data slicer 9 to compensate ambiguous bitstream near main threshold level Sₜₕ. Slicer 124 compares input signal Sin with main threshold level Sₜₕ, high threshold level S_{thH}, and low threshold level S_{thL} to generate serial main bitstream D_{MS}, high bitstream D_{HS}, and low bitstream D_{LS}, where each bit of bitstream D_{MS}, D_{HS}, D_{LS} is one of two possible states.

Serial to parallel converter 126 stores serial bitstream D_{MS}, D_{HS}, D_{LS} in a buffer therein, and converts and outputs serial bitstream D_{MS}, D_{HS}, D_{LS} to parallel bitstream D_{MP}, D_{HP}, D_{LP}.

Serial to parallel converter 126 performs XOR to bitstream D_{HP} and D_{LP} to generate inverted bitstream D_{AP}, and outputs which to data check and correction module 128.

Data check and correction module 128 evaluates ECC of bitstream D_{MP} to determine accuracy, and outputs bitstream D_{MP} as output bitstream Dₒᵤₜ if bitstream D_{MP} is correct. Data check and correction module 128 then performs another ECC check on inverted bitstream D_{AP}, further evaluates ECC of multiple threshold levels (high bitstream D_{HP} or low bitstream D_{LP}) if inverted bitstream D_{AP} is erroneous, and outputs inverted bitstream D_{AP} otherwise. Next Data check and correction module 128 performs yet another ECC check on the bitstream of multiple threshold levels, evaluates ECC of the other multiple threshold level if the bitstream is erroneous, and outputs the correct bitstream otherwise.

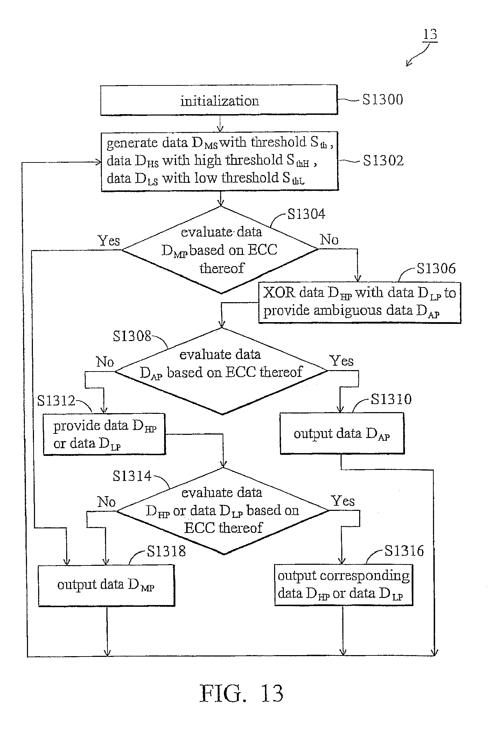

FIG. 13 is a flowchart of an exemplary decoding method incorporating data slicer 12 in FIG. 12. In step S1300, slicer 124 determines slicing frequency and threshold level Sₜₕ according to clock_run_in during initialization. Next in step S1302, slicer 124 compares input signal Sᵢₙ with main threshold level Sₜₕ, high threshold level S_{thH}, and low threshold level S_{thL} to generate serial main bitstream D_{MS}, high bitstream D_{HS}, and low bitstream D_{LS}, each bit of bitstream D_{MS}, D_{HS}, and D_{LS} is one of two possible states. After converting to parallel bitstream D_{MP}, D_{HP}, and D_{LP}, and XORing D_{HP} and D_{LP} to form inverted bitstream D_{AP} (step S1306) in Serial to Parallel converter 126, data check and correction module 128 evaluates validity of bitstream D_{MP} according to the ECC type thereof in step S1304, outputs main bitstream D_{MP} as output bitstream Dₒᵤₜ if the ECC evaluation is errorless (step S1318), otherwise evaluates ECC of inverted bitstream D_{AP} (step S1308). Data check and correction module 128 outputs inverted bitstream D_{AP} as output bitstream Dₒᵤₜ if inverted bitstream D_{AP} is errorless (step S1310), and further evaluates ECC of the multiple threshold level bitstream (high bitstream D_{HP} or low bitstream D_{LP}) otherwise (step S 1314). In step S 1316, bitstream check and correction module 128 outputs the multiple threshold level bitstream as output bitstream Dₒᵤₜ if ECC evaluation thereof is correct, and outputs the original main bitstream D_{MS} otherwise. Decoding method 13 continues to decode input signal Sᵢₙ by steps S1302~S1318, until the process is terminated.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A data slicer, slicing an input signal, comprising:
a comparator comparing the input signal with a threshold level to generate a first bitstream, and identifying an ambiguous bit in the first bitstream when the corresponding input signal is determined as belonging to an ambiguous range; and
a data check module, evaluating whether the first bitstream is erroneous according to an error checking code thereof, and inverting at least one ambiguous bit if the first bitstream is erroneous;
wherein the ambiguous range includes the threshold level.

2. The data slicer of claim 1, wherein the data check module further evaluates whether the first bitstream after inverting the ambiguous bit is erroneous according to the error checking code, and outputs the original first bitstream if the inverted first bitstream is invalid.

3. The data slicer of claim 1, wherein:
the comparator further compares the input signal with a second threshold level to generate a second bitstream; and
the data check module further evaluates whether the inverted first bitstream is erroneous according to the error checking code, evaluating whether the second bitstream is erroneous according to the error checking code if the inverted first bitstream is erroneous, and outputting the second bitstream if it is errorless, else outputting the first bitstream.

4. The data slicer of claim 3, wherein:
the comparator further compares the input signal with a third threshold level to generate a third bitstream; and
the data check module further evaluates whether the third bitstream is erroneous according to the error checking code if the second bitstream is erroneous, and outputting the third bitstream if it is errorless, else outputting the first bitstream.

5. The data slicer of claim 1, wherein the input signal is a television signal, and the data slicer further comprises:
a SYNC separator, receiving the input signal to generate HSYNC and VSYNC signals; and
a counter coupled to the SYNC separator and the comparator, receiving the HSYNC and VSYNC signals to enable the comparator.

6. A data slicer, slicing an input signal, comprising:
a comparator comparing the input signal with a first threshold level to generate a first bitstream, and comparing the input signal with a second threshold level to generate a second bitstream, where each bit of the first and second bitstream is one of two possible states; and
a data check module, evaluating whether the first and second bitstream are erroneous according to an error checking code thereof, and outputting one of the bitstreams based on the evaluation result.

7. The data slicer of claim 6, wherein the data check module evaluates the second bitstream if the first bitstream is erroneous, and outputs the second bitstream if the evaluation result shows the second bitstream is errorless, else outputs the first bitstream.

8. The data slicer of claim 6, wherein:
the comparator further compares the input signal with a third threshold level to generate a third bitstream; and
the data check module further evaluates whether the third bitstream is erroneous according to the error checking code if the second bitstream is erroneous, and outputs the third bitstream if it is errorless.

9. The data slicer of claim 6, wherein the input signal is a television signal, and the data decoder further comprises:
a SYNC separator, receiving the input signal to generate HSYNC and VSYNC signals; and
a counter coupled to the SYNC separator and the comparator, receiving the HSYNC and VSYNC signals to enable the comparator.

10. A method of slicing an input signal, comprising:
comparing the input signal with a threshold level to generate a first bitstream;
identifying an ambiguous bit in the first bitstream when the corresponding input signal is determined as belonging to an ambiguous range;
evaluating whether the first data is inaccurate according to an error checking code thereof; and
inverting at least an ambiguous bit if the first bitstream is erroneous; and
wherein the ambiguous range includes the threshold level.

11. The method of claim 10, further comprising evaluating whether the inverted first data is erroneous using the error checking code, and outputs the first bitstream if the inverted first bitstream is erroneous.

12. The method of claim 10 further comprising:
comparing the input signal with a second threshold level to generate a second bitstream; and
evaluating whether the inverted first bitstream is erroneous using the error checking code, and evaluating whether the second bitstream is erroneous according to the error checking code if the inverted first bitstream is erroneous.

13. The method of claim 10, wherein the input signal is a television signal, and the method further comprises:
receiving the input signal to acquire HSYNC and VSYNC signals; and
enabling comparison between the input signal and the threshold level according to the HSYNC and VSYNC signals.

14. A method of slicing an input signal, comprising:
comparing the input signal with a first threshold level to generate a first bitstream,
comparing the input signal with a second threshold level to generate a second bitstream;
evaluating whether the first and second bitstreams are erroneous according to an error checking code thereof, and
outputting one of the bitstreams based on the evaluation result.

15. The method of claim 14, wherein the second bitstream is evaluated if the first bitstream is erroneous, and it is output if the evaluation result shows the second bitstream is errorless.

16. The method of claim 14, wherein the first threshold level is adaptive based on the first data.

17. The method of claim 14, further comprising outputting the first bitstream if the second bitstream is erroneous, and outputting the second bitstream otherwise.

18. The method of claim 14, further comprising:
identifying an ambiguous bit in the first bitstream when the corresponding input signal is determined as belonging to an ambiguous range; and
inverting the ambiguous bit if the second bitstream is erroneous;
evaluating whether the inverted first bitstream is erroneous using the error checking code; and
outputting the first bitstream if the inverted first bitstream is erroneous;
wherein the ambiguous range includes the threshold level.

19. The method of claim 14, wherein the input signal is a television signal, and the method further comprises:
receiving the input signal to acquire HSYNC and VSYNC signals; and
enabling the comparison between the input signal and the first or second threshold level according to the HSYNC and VSYNC signals.
